# FASCICULE DE BREVET EUROPEEN

(11) **EP 2 336 950 B1**
(45) Date de publication et mention de la délivrance du brevet: **13.04.2016**
(21) Numéro de dépôt: 10195700.9
(22) Date de dépôt: 17.12.2010
(51) Int. Cl.: G06K 19/07, G06K 19/077, G06K 7/10, G06K 7/08

(54) **Dispositif d'échange de données sans contact sécurisé entre un lecteur et une carte**
Vorrichtung zum gesicherten kontaktlosen Datenaustausch zwischen einem Lesegerät und einer Karte
Device for securely exchanging data without contact between a card reader and a card

(30) Priorité: 21.12.2009 FR 0959307
(43) Date de publication de la demande: 22.06.2011
(73) Titulaire: Commissariat à l'Énergie Atomique et aux Énergies Alternatives, 75015 Paris (FR)
(72) Inventeur: Bacquet, Sylvain, 38470, CHASSELAY (FR); Malherbi Martins, Ricardo, 38000, GRENOBLE (FR); Reverdy, Jacques, 38920, CROLLES (FR); Crochon, Elisabeth, 38320, POISAT (FR)
(74) Mandataire: Augarde, Eric

(56) Documents cités:
- EP-A1- 1 256 904
- US-A- 4 679 046

## Description

### DOMAINE TECHNIQUE

La présente invention se situe dans le domaine des échanges de données sans contact, en particulier celui des systèmes d'échanges entre cartes sans contact et un lecteur tels que prévus en RFID (RFID pour « Radio Frequency Identification ») ou par la norme 14443.

Elle met en oeuvre une carte sans contact améliorée ainsi qu'un lecteur permettant de lire des données sur une telle carte et de réaliser des échanges sécurisés de données.

### ART ANTÉRIEUR

La norme 14443 définit un type de transaction, entre un lecteur, et un transpondeur, tel que par exemple une carte, ou un billet, ou une étiquette, placée dans le champ électromagnétique émis par le lecteur.

Les communications ont lieu par voie inductive entre le lecteur et le transpondeur lorsque ce dernier entre dans la zone de couplage avec le lecteur.

Les transactions peuvent être réalisées à courte distance, c'est-à-dire à une distance qui est généralement inférieure, ou de l'ordre, d'une dizaine de centimètres.

Dans certaines applications, des échanges de données confidentielles entre un lecteur et une carte peuvent être mis en oeuvre. Ces échanges de données se font à l'initiative du lecteur, et ne nécessitent pas d'action particulière du porteur de la carte, sauf à mettre cette dernière dans le champ électromagnétique créé par le lecteur.

Des problèmes d'intrusion dans une carte ou d'interception lors d'une transaction entre le lecteur et la carte peuvent survenir.

Le « skimming », dans le domaine de la RFID, désigne l'action d'activer une carte sans contact afin d'y récupérer des données confidentielles, par exemple des données d'identification, de code confidentiel, des données relatives à une somme d'argent, en se faisant passer pour un lecteur autorisé à lire ces données.

Ce type d'intrusion est possible dans le cas où le lecteur génère un champ suffisant et adopte un protocole de communication attendu par la carte.

L'« Eavesdropping » désigne l'action selon laquelle un intrus utilise un dispositif de réception pour intercepter la communication entre un lecteur autorisé et une carte sans contact.

Il s'avère donc nécessaire de sécuriser le lien sans contact entre un lecteur et une carte.

Les cartes sans contact sont généralement équipées d'une antenne simple sous forme d'une boucle de forme rectangulaire ou circulaire et peuvent être activées par un lecteur non autorisé générant un champ suffisamment fort ou s'approchant suffisamment.

Le document EP 1 256 904 B1 divulgue un dispositif d'échange de données sans contact comprenant un lecteur de carte sans contact présentant au moins 2 antennes et un circuit de modulation.

Le dispositif peut mettre en oeuvre un premier mode de modulation dans lequel les modulations des antennes subissent une interférence constructive en s'éloignant du lecteur et un second mode de modulation dans lequel les modulations des antennes subissent une interférence destructive en s'éloignant du lecteur. Cette modulation est réalisée par la différence de modulation entre 2 antennes, que l'on appelle par la suite le différentiel de modulation.

Ce dispositif comprend également une carte présentant au moins deux antennes et un circuit de démodulation.

La sécurisation des données contenues dans la carte n'est pas garantie, en effet, si le champ électromagnétique du lecteur espion rayonne majoritairement sur l'une des boucles de l'antenne carte, le différentiel de modulation réalisé par ladite carte se fait sur deux niveaux de modulation différents.

Afin de réduire les possibilités d'intrusion dans une carte, une solution peut être de réduire la taille des antennes de la carte.

Dans ce cas, la position relative entre le lecteur espion et la carte devrait être très précise.

Par contre une telle solution rend plus difficile une transaction entre un lecteur autorisé et une carte sans contact.

Il se pose le problème de trouver un nouveau système de communication sans contact amélioré en termes de sécurité des transactions entre un lecteur et une carte.

### EXPOSÉ DE L'INVENTION

L'invention concerne tout d'abord un transpondeur selon la revendication 1.

Le premier signal et le deuxième signal peuvent être des signaux de porteuse.

Selon une première possibilité de mise en oeuvre, les moyens pour autoriser ou empêcher la transmission de données peuvent comprendre :
- des moyens de déphasage, pour introduire un déphasage donné à un signal issu de la deuxième boucle,
- des moyens de sommation, pour sommer un signal issu de la première boucle et un autre signal provenant de la deuxième boucle et issu des moyens de déphasage.

Le transpondeur peut être alimenté par télé-alimentation.

Selon une possibilité de mise en oeuvre, l'alimentation peut être créée à l'aide d'un signal résultant de la somme entre un signal issu de la première boucle et un signal issu de la deuxième boucle et ayant subi le déphasage donné.

Lorsque le déphasage entre le premier signal reçu par la première boucle et le deuxième signal reçu par la deuxième boucle, est différent d'un déphasage prédéterminé, le transpondeur peut ne pas être alimenté ou être sous-alimenté.

Par « sous alimenté » on entend que l'alimentation délivre une tension insuffisante pour permettre à un ou plusieurs modules du transpondeur de fonctionner, et en particulier à des moyens démodulateurs et/ou modulateurs de charge et/ou à au moins une unité logique de commande de ces moyens modulateurs de charge et/ou à un module mémoire.

Le déphasage donné peut être un déphasage de K *π (avec K un entier impair supérieur à 0).

Selon une deuxième possibilité de mise en oeuvre, les moyens pour autoriser ou empêcher la transmission de données peuvent comprendre : des moyens d'analyse de déphasage, pour analyser le déphasage entre un premier signal reçu par la première boucle et un deuxième signal reçu par la deuxième boucle, une transmission des données étant empêchée consécutivement à une détection par les moyens d'analyse de déphasage d'un déphasage différent d'un déphasage prédéterminé.

Le transpondeur comprend en outre des moyens démodulateurs pour démoduler des signaux issus des boucles d'antennes.

Les moyens d'analyse de déphasage peuvent être prévus pour générer un signal d'activation ou de désactivation des moyens démodulateurs en fonction du déphasage détecté entre le premier signal et le deuxième signal.

La première boucle d'antenne et la deuxième boucle d'antenne forment respectivement un premier circuit résonant de charge donnée et un deuxième circuit résonant de charge donnée.

Le transpondeur peut comporter en outre :
- des premiers moyens de modulation pour moduler la charge du premier circuit résonant et des deuxièmes moyens de modulation pour moduler la charge du deuxième circuit résonant,
- des moyens de commande aptes à commander des premiers moyens de modulation et des deuxièmes moyens de modulation,
- le transpondeur peut être caractérisé en ce que consécutivement à une détection par les moyens d'analyse de déphasage d'un déphasage différent d'un déphasage prédéterminé, la commande de la modulation du premier circuit résonant et du deuxième circuit résonant est stoppée.

Selon une possibilité de mise en oeuvre des boucles d'antenne du transpondeur, la première boucle et la deuxième boucle peuvent former un contour fermé en forme de huit.

Cette possibilité de mise en oeuvre, permet, de limiter l'ajout de plots de connexions entre l'antenne et une puce comportant notamment les moyens de modulation et les moyens de commande.

La première boucle et la deuxième boucle peuvent former respectivement un premier contour et un deuxième contour disjoint du premier contour.

La première boucle et la deuxième boucle peuvent former respectivement un premier contour et un deuxième contour, le premier contour étant situé à l'intérieur du deuxième contour.

L'invention concerne également un lecteur selon la revendication 12.

Le déphasage peut être un déphasage de K *π (avec K un entier impair supérieur à 0).

L'invention concerne également un système d'échange de données sans contact comprenant un transpondeur tel que défini plus haut et un lecteur tel que défini précédemment.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 représente un système d'échange de données sans contact, lecteur-transpondeur,
- les figures 2A-2C illustrent différentes structures d'antennes susceptibles d'être mises en oeuvre dans un système d'échange de données sans contact suivant l'invention,
- les figures 3A-3C illustrent différentes structures d'antennes susceptibles d'être mises en oeuvre dans un lecteur d'un système RFID,
- les figures 4A-4C illustrent différentes structures d'antennes susceptibles d'être mises en oeuvre dans un système RFID,
- les figures 5A-5B illustrent respectivement un positionnement d'antennes d'un lecteur suivant l'invention par rapport à celles d'un transpondeur mis en oeuvre suivant l'invention, et un positionnement d'antennes d'un lecteur suivant l'art antérieur et d'un transpondeur mis en oeuvre suivant l'invention,
- la figure 6 illustre une unité de réception et de réponse à 4 boucles d'antennes dans un transpondeur mis en oeuvre suivant l'invention,
- les figures 7 et 8 illustrent des modes de fonctionnement d'un système d'échange de données sans contact entre un lecteur et un transpondeur suivant l'invention,
- les figures 9A-9B illustrent un exemple de fonctionnement d'un système d'échange de données suivant l'invention,
- les figures 10A-10B illustrent respectivement un premier exemple de structure de transpondeur suivant l'invention, et un deuxième exemple de transpondeur suivant l'invention,
- la figure 11 illustre un exemple de structure de moyens d'analyse de phase suivant l'invention,
- la figure 12 illustre un exemple de structure de lecteur suivant l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION DE L'INVENTION

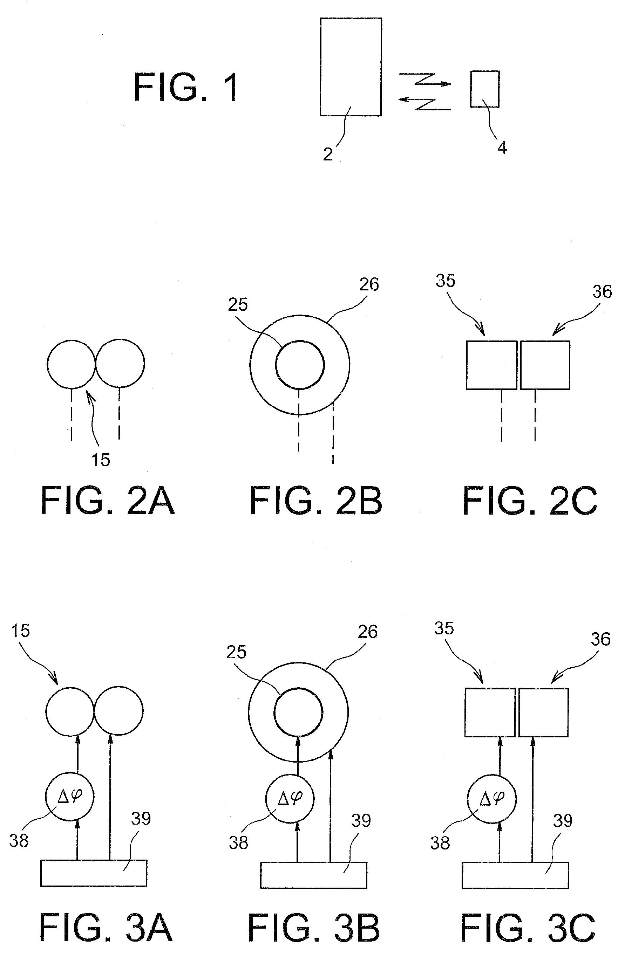

Sur la figure 1, est représenté schématiquement un système d'échange de données sans contact comprenant un lecteur 2, qui échange par couplage des signaux magnétiques radio-fréquence avec un transpondeur 4.

Le transpondeur peut être, par exemple, sous forme d'une carte.

Ces signaux comportent des informations ou des données, et peuvent également être exploités par le transpondeur pour lui permettre de créer sa tension d'alimentation, par exemple à l'aide d'un système de redressement et de filtrage d'un signal sinusoïdal qui constitue une porteuse.

Ces signaux peuvent également comporter des données d'horloge, ou de synchronisation, afin de permettre au transpondeur 4, de déterminer le débit auxquelles les données ou les informations sont émises.

Le transpondeur 4 comporte une unité de réception et de transmission comprenant des boucles d'antenne, par exemple au moins deux boucles d'antennes.

De même, le lecteur 2 est doté d'une unité d'émission-réception comprenant des boucles d'antenne, par exemple au moins deux boucles d'antennes.

Les boucles d'antennes du transpondeur 4 peuvent être par exemple sous forme d'un contour conducteur 15 en forme de huit (figure 2A), ou de contours conducteurs disjoints juxtaposés, par exemple de formes circulaires ou rectangulaires 35, 36, (figure 2C), ou par exemple d'au moins un contour conducteur 25 situé dans un autre contour conducteur 26 (figure 2B).

Dans ce dernier cas, la précision de positionnement du transpondeur 4 par rapport au lecteur 2 est moins contraignante.

La boucle centrale et la boucle périphérique peuvent être formées de pistes conductrices enroulées rendues équivalentes en surface active par un nombre de tours de pistes enroulées différent.

De par la structure de cette antenne, lorsqu'on plonge l'une des boucles dans le champ, on plonge les deux boucles dans le champ.

La forme ainsi que le nombre des antennes de l'unité d'émission/réception du lecteur 2 peut être variable.

Le lecteur 2 peut comporter des boucles d'antenne par exemple telles que celles données sur les figures 2A, 2B et 2C.

L'unité d'émission/réception du lecteur 2 peut comporter des moyens formant un déphaseur 38 prévu pour appliquer un déphasage prédéterminé Δϕ entre un signal émis par une boucle d'antenne donnée parmi les boucles d'antenne de l'unité d'émission/réception du lecteur et un autre signal émis par l'autre des boucles d'antenne, associée à ladite boucle donnée, en particulier des signaux de porteuse (figures 3A-3C).

Le déphaseur 38 peut être réalisé par exemple à l'aide d'un filtre, qui peut être formé à l'aide de composants passifs, ou d'une ligne à retard.

Ce déphasage constitue un codage afin que le transpondeur 4 recevant de tels signaux, puisse authentifier le lecteur 2.

Ce déphasage peut être par exemple un déphasage de K*π (avec K un entier impair supérieur à 0).

Le lecteur 2 peut être ainsi prévu pour émettre des signaux en opposition de phase entre ses deux boucles d'antenne associées.

L'unité d'émission/réception peut comprendre également un bloc générateur 39 émettant une porteuse par exemple à une fréquence de 13,56 MHz.

Le lecteur 2 comporte un oscillateur et différents modules réalisant par exemple des fonctions d'amplification, de modulation qui peuvent être pilotées par un circuit logique, ainsi que des modules relatifs au décodage de l'information retournée par un transpondeur, en particulier des modules réalisant des fonctions de redressement, filtrage, amplification.

Le transpondeur 4 peut, quant à lui, selon une première possibilité de mise en oeuvre, comporter des moyens d'analyse de phase prévus pour mesurer ou détecter un déphasage donné prédéterminé entre un signal de porteuse reçu par une boucle d'antenne donnée du transpondeur et un autre signal de porteuse reçu par une autre boucle d'antenne, associée à ladite boucle donnée.

Les moyens d'analyse de phase peuvent être réalisés par exemple à l'aide de moyens d'échantillonnage des signaux, de moyens pour déterminer le maximum entre chaque signal et de moyens pour calculer le décalage ou le temps entre ces maxima.

Cette mesure ou détection d'un déphasage donné prédéterminé entre les signaux de porteuse reçus par les boucles d'antennes du transpondeur est utilisé par le transpondeur 4 pour lui permettre d'authentifier le lecteur 2.

Le transpondeur 4 peut, par exemple, authentifier un lecteur par des signaux en opposition de phase reçus sur ses boucles d'antenne associées, c'est-à-dire par des signaux émis en opposition de phase par deux boucles d'antennes associées du lecteur.

Le module d'analyse de déphasage peut être associé à des moyens prévus pour autoriser ou empêcher une émission de données contenues dans le transpondeur par ce dernier.

Pour cela, en fonction du résultat de la mesure ou de la détection effectué(e) par le module d'analyse de déphasage, la rétro-modulation du signal de porteuse peut être autorisée ou empêchée afin de retourner ou non les données demandées vers le lecteur.

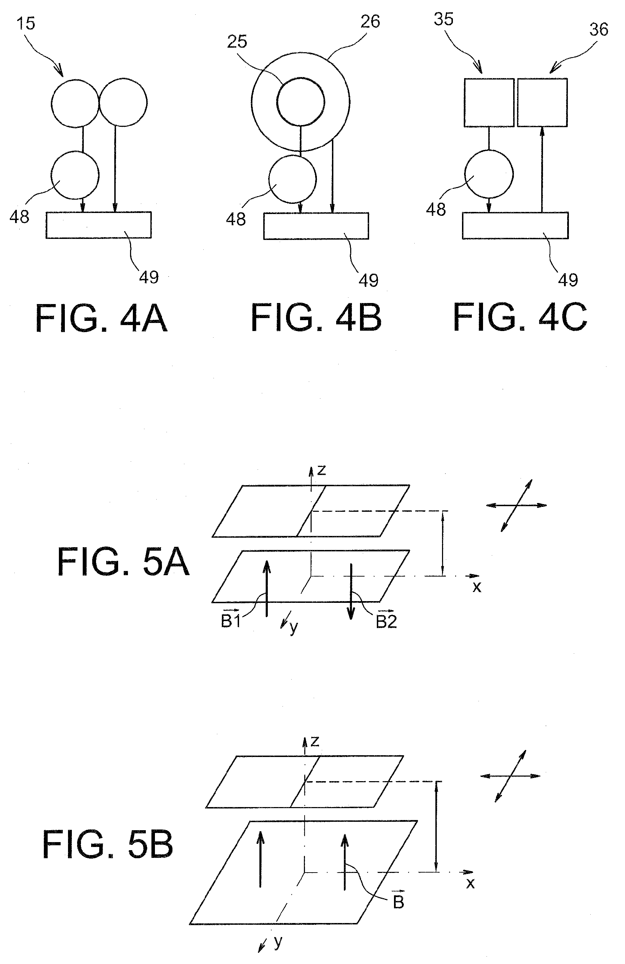

Selon une autre possibilité de mise en oeuvre, le transpondeur 4 peut comporter des moyens 48 pour introduire un déphasage entre un signal reçu par une boucle d'antenne donnée du transpondeur et un autre signal reçu par une autre boucle d'antenne, associée à ladite boucle donnée, ainsi que des moyens 49 pour sommer le signal issu des moyens de déphasage et provenant d'une des boucles d'antenne, avec le signal issu de l'autre boucle d'antenne (figures 4A-4C).

Le résultat de cette somme peut permettre d'autoriser le lecteur 2.

Une transmission de données vers un lecteur peut dans ce cas, être empêchée en privant le transpondeur d'alimentation ou en sous alimentant le transpondeur.

Par « sous alimentant » on entend que l'alimentation délivre une tension insuffisante pour permettre au transpondeur de fonctionner, de sorte que ce dernier ne peut transmettre de donnée.

Sur la figure 5A, des boucles d'antenne respectives d'un lecteur suivant l'invention et d'un transpondeur tel que mis en oeuvre suivant l'invention, sont représentées.

Les champs magnétiques B1, B2, émis par les antennes du lecteur sont en opposition de phase de sorte que le transpondeur peut, en analysant la différence de phase des signaux reçus sur ses boucles d'antenne, permettre au transpondeur d'identifier le lecteur comme autorisé à lire les données qu'il contient.

Sur la figure 5B, les boucles d'antenne d'un lecteur suivant l'art antérieur et d'un transpondeur tel que mis en oeuvre suivant l'invention, sont représentées.

Le lecteur émet, dans cet exemple, un champ magnétique B homogène.

Le transpondeur peut, en analysant la différence de phase des signaux reçus sur ses boucles d'antenne, identifier un lecteur, comme non autorisé à lire les données qu'il contient ou non autorisé à lire toutes les données qu'il contient, en particulier non autorisé à lire ses données confidentielles.

Le lecteur et le transpondeur peuvent comprendre chacun plus de deux boucles conductrices associées.

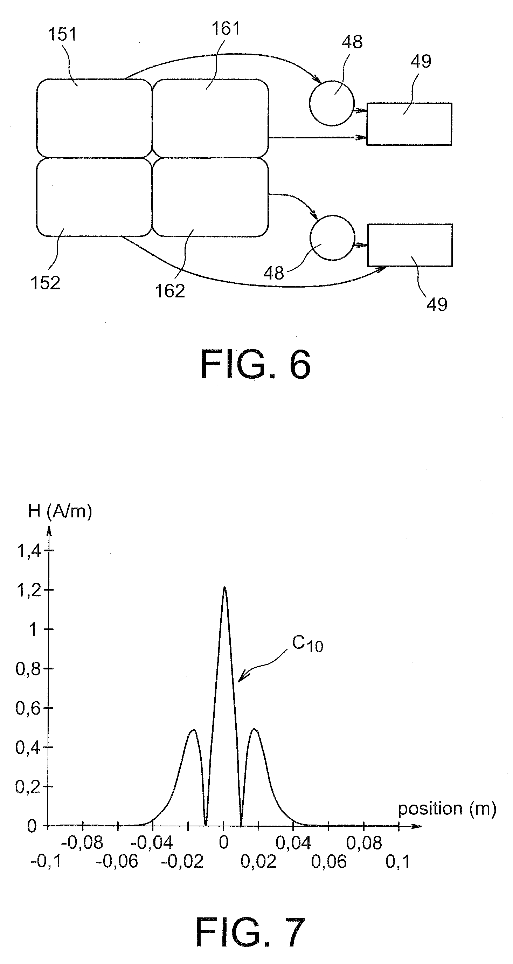

Sur l'exemple de dispositif de la figure 6, 4 boucles 151, 152, 161, 162 d'antennes d'un transpondeur sont représentées.

Les boucles 151 et 161 sont associées entre elles, tandis que les boucles 152 et 162 sont également associées entre elles de sorte qu'on compare la différence de phase du signal émis par la boucle 151 et du signal émis par la boucle 161, et la différence de phase entre le signal émis par la boucle 152 et le signal émis par la boucle 162.

Des simulations réalisées sur cette antenne montrent la répartition du champ moyenné sur une antenne de dimension 25 mm x 15 mm.

La courbe C₅₀ de la figure 7 montre qu'une activation de la carte avec l'antenne est possible avec une précision de positionnement de 2 cm, et avec une antenne lecteur identique.

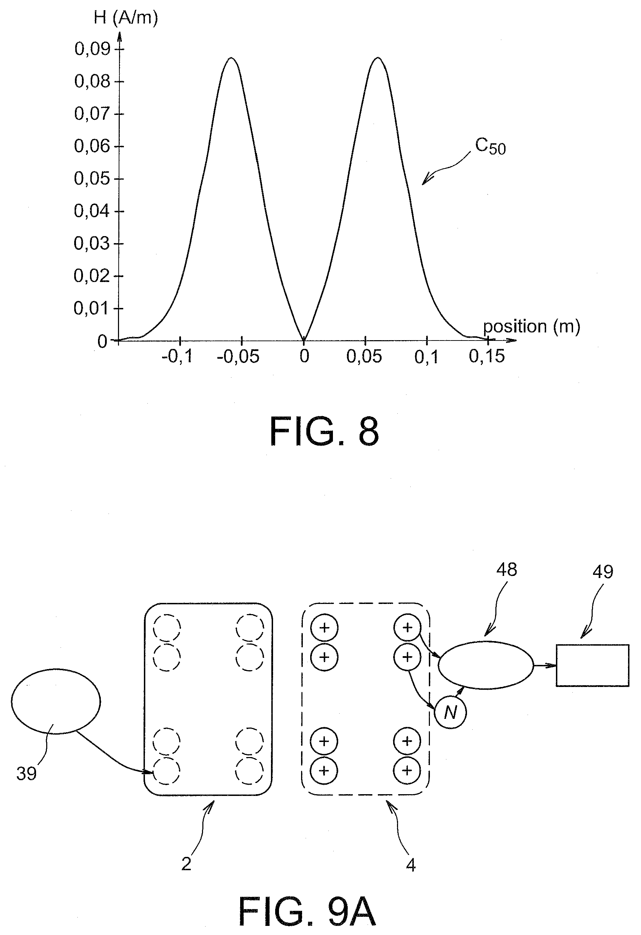

Avec une même carte placée dans le champ magnétique d'une antenne d'un lecteur non autorisé, le niveau du champ sur la surface de l'antenne carte est beaucoup plus faible (courbe C₅₀ de la figure 8).

Deux modes de fonctionnement peuvent être mis en oeuvre dans un système d'échange de données sans contact tel que mis en oeuvre suivant l'invention.

Un premier mode dit « mode sécurisé permanent », dans lequel le transpondeur peut transmettre des données qu'il contient uniquement en présence d'un lecteur qu'il reconnait comme lecteur autorisé de par le déphasage spécifique des signaux provenant du lecteur que le transpondeur a détecté sur ses boucles d'antenne associées.

Dans ce premier mode, le transpondeur ne transmet aucune donnée, lorsqu'il détecte un lecteur non autorisé.

Un lecteur non autorisé peut être un lecteur 2 suivant l'art antérieur, qui émet un champ homogène de sorte que l'analyse du déphasage opéré par le transpondeur 4 indique un déphasage différent de celui attendu par ce dernier.

Un deuxième mode, dit « mode sécurisé élargi », permet quant à lui au transpondeur 4 de fonctionner avec un lecteur 2 suivant l'art antérieur n'ayant pas de configuration spécifique, pour transmettre des données d'un type non confidentiel, lorsque le transpondeur ne le reconnait pas comme lecteur autorisé de par le déphasage des signaux provenant de ce lecteur (figure 9A).

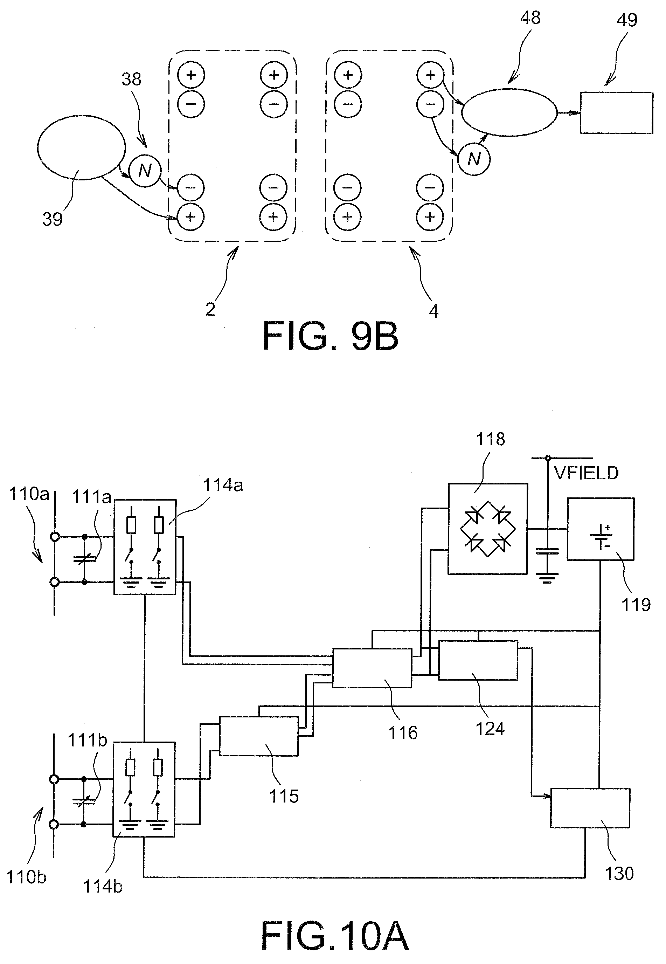

Dans ce deuxième mode, le transpondeur peut également transmettre des données de type confidentiel, lorsque le transpondeur le reconnait comme lecteur autorisé de par l'analyse du déphasage des signaux provenant de ce lecteur 2 que le transpondeur 4 a détecté sur ses boucles d'antenne associées (figure 9B).

Un premier exemple détaillé de mise en oeuvre d'un dispositif transpondeur suivant l'invention est donné sur la figure 10A.

Le transpondeur comprend un premier circuit résonant 110a comportant une première capacité 111a, connectée à une première boucle d'antenne inductive, et un circuit résonant 110b comportant une deuxième capacité 111b, connectée à une deuxième boucle d'antenne inductive, les boucles d'antennes 110a, 110b formant par exemple l'une ou l'autre des structures décrites précédemment en liaison avec les figures 2A-2C.

Des moyens modulateur 114a sont prévus pour moduler la charge du premier circuit résonant 110a, tandis que des moyens modulateurs 114b permettent de moduler la charge du deuxième circuit résonant 110b.

Les moyens modulateurs 114a, 114b sont commandés par une unité logique 130 de commande.

En sortie du deuxième circuit résonant 110b peut être prévu un étage déphaseur 115, pour appliquer un déphasage donné au signal issu du deuxième circuit résonant 110b, par exemple pour appliquer un déphasage de n. L'étage déphaseur 115 peut être mis en oeuvre, par exemple, à l'aide de lignes à retard.

Un étage sommateur 116 est prévu en sortie du premier circuit résonant 110a et de l'étage déphaseur 115, afin d'effectuer une somme entre un signal provenant de la première boucle d'antenne et un signal provenant de la deuxième boucle d'antenne et qui a été déphasé de n par l'étage 115.

Un redresseur de tension 118 est prévu en sortie de l'étage sommateur 116 et assure une conversion de tension alternative en tension continue.

En sortie du redresseur de tension 118, un régulateur 119 de tension peut être également prévu.

L'alimentation du transpondeur est générée à l'aide de signaux provenant du lecteur 2. Dans cet exemple, suivant l'invention, l'alimentation du transpondeur est ainsi créée à partir du signal provenant du sommateur 116, de sorte que lorsque le signal issu du sommateur 116 est nul ou inférieur à un seuil donné, le transpondeur n'est pas alimenté ou est insuffisamment alimenté.

Par « insuffisamment alimenté », on entend que l'alimentation créée à l'aide du signal provenant du sommateur 116 met en oeuvre une tension insuffisante pour permettre notamment à l'unité logique de commande de fonctionner, et donc aux moyens modulateurs 114a, 114b de moduler la charge des circuits résonants, ainsi que de pouvoir accéder à un bloc mémoire du transpondeur.

Un étage démodulateur 124 est également prévu en sortie du sommateur 116. Lorsque l'étage démodulateur 124 est insuffisamment alimenté, la démodulation de la commande du lecteur est également empêchée.

Le transpondeur comprend également au moins un bloc mémoire (non représenté sur la figure 10A) comportant des données à transmettre.

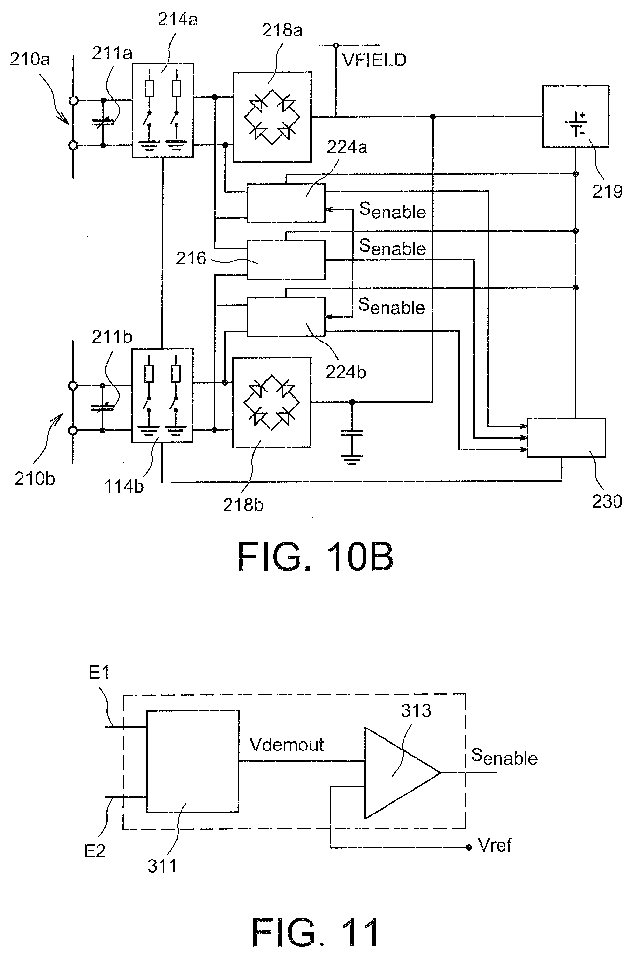

Un deuxième exemple de dispositif transpondeur est donné sur la figure 10B, et comprend un premier circuit résonant 210a comportant une première capacité 211a connectée en parallèle à une première boucle d'antenne inductive, et un deuxième circuit résonant 210b comportant une deuxième capacité 211b, connectée en parallèle à une deuxième boucle d'antenne, disjointe de la première boucle inductive les boucles d'antennes ayant par exemple une forme telle que sur la structure de la figure 2B ou de la figure 2C.

Le premier circuit résonant 210a et le deuxième circuit résonant 210b sont associés respectivement à des moyens modulateurs 214a, et des moyens modulateur 214b.

Les moyens modulateurs 214a sont prévus pour moduler la charge du premier circuit résonant 210a, en fonction de signaux délivrés par un circuit logique 230 de commande.

Les moyens modulateurs 214b sont quant à eux prévus pour moduler la charge du deuxième circuit résonant 210b, en fonction de signaux délivrés par le circuit logique 230 de commande.

Un redresseur de tension 218a est prévu aux bornes de l'antenne 210a, tandis qu'un autre redresseur de tension 218b est prévu aux bornes de l'autre antenne 210b. Un régulateur 219 de tension est prévu en sortie des redresseurs de tension 218a, 218b.

Dans cet exemple, le transpondeur comporte un étage analyseur de phase 216 prévu en sortie des circuits résonants 211a, 211b, pour analyser le déphasage entre un signal issu du premier circuit résonant 210a et un signal issu du deuxième circuit résonant 210b.

En fonction du déphasage détecté par l'analyseur de phase 216, ce dernier est susceptible de délivrer ou non un signal d'activation S_{enable} aux démodulateurs 224a, 224b. Ce signal d'activation S_{enable} peut être également destiné à l'unité de commande 230.

Un premier démodulateur 224a est connecté au premier circuit résonant 210a, tandis qu'un autre démodulateur 224b est connecté au deuxième circuit résonant 210b.

Lorsque les moyens d'analyse de déphasage détectent un déphasage différent d'un déphasage prédéterminé, les démodulateurs 224a, 224b sont désactivés ou ne sont pas activés.

Dans ce cas, l'unité logique 230 de commande, ne reçoit pas de signaux issus des démodulateurs 224a, 224b et ne transmet pas de signal de commande aux moyens modulateurs 214a, 214b.

Lorsque les moyens d'analyse de déphasage détectent un déphasage égal au déphasage prédéterminé, par exemple un déphasage de K*π (avec K un entier impair supérieur à 0), les démodulateurs 224a, 224b sont activés à l'aide du signal Senable, de sorte que des signaux issus des circuits résonants 210a, 210b peuvent être démodulés et transmis au circuit logique 230 de commande, qui commande les moyens modulateurs 214a, 214b.

Un exemple de mise en oeuvre du module d'analyse de déphasage est donné sur la figure 11, et comprend un bloc 311, par exemple un composant PLL (PLL pour « phase locked loop ») prévu pour délivrer un signal de sortie Vdemout dont l'amplitude et la phase dépendent de la différence de phase (ϕ2-ϕ1) entre ses entrées E2 et E1.

Le signal de sortie Vdemout peut être ensuite comparé à l'aide de moyens comparateurs 313 à un signal de référence Vref, fixé en fonction d'un déphasage prédéterminé pour lequel on souhaite que les moyens d'analyse de déphasage émettent un signal d'acquittement.

Selon une possibilité de mise en oeuvre, les moyens comparateurs 313 peuvent être remplacés par des moyens permettant de générer un signal Senable lorsque Vdemout est égal à vref, à un hystérésis prés, par exemple en disposant deux comparateurs à hystérésis, avec par exemple un inverseur et un non-inverseur et en réalisant une combinaison logique ET des 2 sorties de ces comparateurs.

Le transpondeur comprend également au moins un bloc mémoire (non représenté sur la figure 10B) comportant des données à transmettre.

Dans cet exemple de réalisation, le transpondeur est capable de distinguer un lecteur espion d'un lecteur autorisé par l'analyse de phase des signaux reçus à l'aide des moyens d'analyse de phase 216.

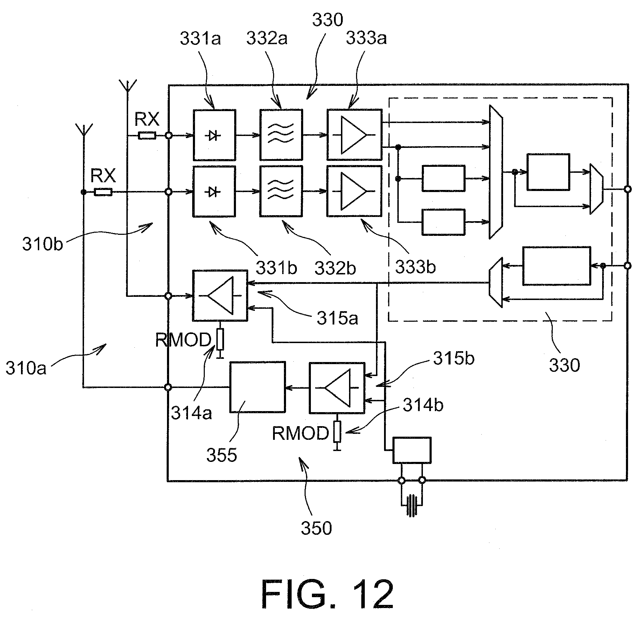

Un exemple de mise en oeuvre d'un lecteur est donné sur la figure 12.

Dans cet exemple, le lecteur comprend un premier circuit d'antenne 310a et un deuxième circuit d'antenne 310b, prévus pour émettre des signaux déphasés, selon un déphasage prédéterminé destiné à permettre d'authentifier ce lecteur.

Le lecteur peut être ainsi doté de moyens déphaseurs 355, pour introduire un déphasage prédéterminé à des signaux provenant de l'unité d'émission 350 du lecteur.

L'unité d'émission 350 du lecteur peut être également dotée de moyens d'amplification 315a, 315b, et de modulation 314a, 314b.

L'unité de réception 330 du lecteur peut quant à elle être dotée d'étages redresseurs 331a, 331b, de filtrage 332a, 332b, d'amplification 333a, 333b.

Selon une possibilité un transpondeur suivant l'invention peut être mis en oeuvre de sorte qu'il peut être placé dans un mode non sécurisé. Dans ce cas le transpondeur autorise tous les lecteurs à lire les informations non sécurisées.

Un passage du mode non sécurisé à un mode sécurisé sera demandé à la carte par une commande spécifique.

Suite à la réception de cette commande, le transpondeur analyse les signaux sur ses différentes boucles d'antenne.

Un lecteur autorisé demande au transpondeur de lui renvoyer les données sécurisées dont il a besoin.

Seul un lecteur émettant des signaux déphasés selon un déphasage prédéterminé détectable par le transpondeur pourra lire les données sécurisées.

## Revendications

1. Transpondeur de système d'échange de données sans contact, comportant :
- une unité de réception et de transmission de données dotée d'au moins une première boucle d'antenne (110a, 210a) et d'au moins une deuxième boucle d'antenne (110b, 210b) pour réaliser un couplage avec un lecteur (2),**caractérisé par**
- des moyens (216, 224a, 224b, 115, 116) pour autoriser ou empêcher la transmission de données en fonction du déphasage (ΔΦ) entre un premier signal de porteuse reçu par la première boucle et un deuxième signal de porteuse reçu par la deuxième boucle.

2. Transpondeur de système d'échange de données sans contact selon la revendication 1, lesdits moyens pour autoriser ou empêcher la transmission de données comprenant :
- des moyens de déphasage (115), pour introduire un déphasage donné à un signal issu de la deuxième boucle,
- des moyens de sommation (116), pour sommer un signal issu de ladite première boucle et un autre signal, provenant de ladite deuxième boucle et issu des moyens de déphasage.

3. Transpondeur de système d'échange de données sans contact selon la revendication 2, le transpondeur étant alimenté à l'aide d'un signal résultant de la somme entre un signal issu de la première boucle et un signal issu de la deuxième boucle et ayant subi le déphasage donné.

4. Transpondeur de système d'échange de données sans contact selon la revendication 2 ou 3, dans lequel lorsque le déphasage entre le premier signal reçu par la première boucle (110a) et le deuxième signal reçu par la deuxième boucle (110b), est différent d'un déphasage prédéterminé, le transpondeur n'est pas alimenté ou est sous-alimenté.

5. Transpondeur de système d'échange de données sans contact selon l'une des revendications 2 à 4, le déphasage donné étant un déphasage de K *π (avec K un entier impair supérieur à 0).

6. Transpondeur de système d'échange de données sans contact selon la revendication 1, lesdits moyens pour autoriser ou empêcher la transmission de données comprenant :
- des moyens d'analyse (216) de déphasage, pour analyser le déphasage entre un premier signal reçu par la première boucle et un deuxième signal reçu par la deuxième boucle, une transmission des données étant empêchée consécutivement à une détection par les moyens d'analyse de déphasage d'un déphasage différent d'un déphasage prédéterminé.

7. Transpondeur de système d'échange de données sans contact selon la revendication 6, dans lequel le transpondeur comprend en outre des moyens démodulateurs (224a, 224b), les moyens d'analyse de déphasage étant prévus pour émettre un signal d'activation ou de désactivation des moyens démodulateurs (224a, 224b) en fonction du déphasage détecté entre le premier signal et le deuxième signal.

8. Transpondeur de système d'échange de données sans contact selon l'une des revendications 1 à 6, dans lequel la première boucle d'antenne et la deuxième boucle d'antenne forment respectivement un premier circuit résonant de charge donnée et un deuxième circuit résonant de charge donné, le transpondeur comportant :
- des premiers moyens de modulation (114a, 214a) pour moduler la charge du premier circuit résonant (110a, 210a) et des deuxièmes moyens de modulation (114a, 214a) pour moduler la charge du deuxième circuit résonant,
- des moyens de commande (230) aptes à commander des premiers moyens de modulation et des deuxièmes moyens de modulation, le transpondeur étant **caractérisé en ce que** consécutivement à une détection par les moyens d'analyse de déphasage d'un déphasage différent d'un déphasage prédéterminé, la commande de la modulation du premier circuit résonant et du deuxième circuit résonant est stoppée.

9. Transpondeur selon l'une des revendications 1 à 8, la première boucle et la deuxième boucle formant un contour fermé en forme de huit (15).

10. Transpondeur selon l'une des revendications 1 à 8, la première boucle et la deuxième boucle formant respectivement un premier contour et un deuxième contour disjoint du premier contour.

11. Transpondeur selon la revendication 1, la première boucle et la deuxième boucle formant respectivement un premier contour et un deuxième contour, le premier contour (25) étant situé à l'intérieur du deuxième contour (26).

12. Lecteur de système d'échange de données sans contact, comportant une unité d'émission/réception de données dotée :
- d'au moins une boucle d'antenne (310a, 35, 25, 15) et d'au moins une autre boucle d'antenne (310b, 36, 26, 16) pour réaliser un couplage avec un transpondeur, **caractérisé par**
- des moyens de déphasage (355) adaptés à introduire un déphasage prédéterminé entre au moins un signal émis par ladite boucle d'antenne et au moins un autre signal émis par ladite autre boucle d'antenne, le dit déphasage étant égal à K *π où K est un entier impair supérieur à 0.

13. Système d'échange de données sans contact, comprenant un transpondeur selon l'une des revendications 1 à 11, et un lecteur selon la revendication 12.

## Patentansprüche

1. Transponder für ein System zum kontaktlosen Datenaustausch, umfassend:
- eine Datenempfangs- und Übertragungseinheit, die mit wenigstens einer ersten Antennenschleife (110a, 210a) und mit wenigstens einer zweiten Antennenschleife (110b, 210b) ausgestattet ist, um eine Kopplung mit einem Lesegerät (2) zu realisieren, **gekennzeichnet durch**
- Mittel (216, 224a, 224b, 115, 116) zum Autorisieren oder Verhindern der Übertragung von Daten als Funktion der Phasenverschiebung (ΔΦ) zwischen einem ersten Trägersignal, das **durch** die erste Schleife empfangen ist, und einem zweiten Trägersignal, das **durch** die zweite Schleife empfangen ist.

2. Transponder für ein System zum kontaktlosen Datenaustausch nach Anspruch 1, wobei die Mittel zum Autorisieren oder Verhindern der Übertragung von Daten umfassen:
- Phasenverschiebungsmittel (115) zum Einführen einer gegebenen Phasenverschiebung in ein Signal, das von der zweiten Schleife stammt,
- Summierungsmittel (116) zum Summieren eines von der ersten Schleife stammenden Signals und eines anderen Signals, das aus der zweite Schleife kommt und von den Phasenverschiebungsmitteln stammt.

3. Transponder für ein System zum kontaktlosen Datenaustausch nach Anspruch 2, wobei der Transponder mit Hilfe eines Signals versorgt wird, welches aus der Summe eines aus der ersten Schleife stammenden Signals und eines aus der zweiten Schleife stammenden Signals resultiert, das der gegebenen Phasenverschiebung unterzogen wurde.

4. Transponder für ein System zum kontaktlosen Datenaustausch nach Anspruch 2 oder 3, bei dem dann, wenn die Phasenverschiebung zwischen dem durch die erste Schleife (110a) empfangenen ersten Signal und dem durch die zweite Schleife (110b) empfangenen zweiten Signal von einer vorbestimmten Phasenverschiebung verschieden ist, der Transponder nicht versorgt wird oder unterversorgt wird.

5. Transponder für ein System zum kontaktlosen Datenaustausch nach einem der Ansprüche 2 bis 4, wobei die gegebene Phasenverschiebung eine Phasenverschiebung um K **π* ist (wobei K eine ungerade ganze Zahl größer als 0 ist).

6. Transponder für ein System zum kontaktlosen Datenaustausch nach Anspruch 1, wobei die Mittel zum Autorisieren oder zum Verhindern der Übertragung von Daten umfassen:
- Phasenverschiebungsanalysemittel (216), um die Phasenverschiebung zwischen einem durch die erste Schleife empfangenen ersten Signal und einem durch die zweite Schleife empfangenen zweiten Signal zu analysieren, wobei eine Übertragung von Daten verhindert wird im Anschluss an eine Erfassung einer Phasenverschiebung durch die Phasenverschiebungsanalysemittel, die von einer vorbestimmten Phasenverschiebung verschieden ist.

7. Transponder für ein System zum kontaktlosen Datenaustausch nach Anspruch 6, bei dem der Transponder ferner Demodulationsmittel (224a, 224b) umfasst, wobei die Phasenverschiebungsanalysemittel dazu ausgelegt sind, ein Signal zur Aktivierung oder Deaktivierung der Demodulationsmittel (224a, 224b) als Funktion der Phasenverschiebung zu emittieren, die zwischen dem ersten Signal und dem zweiten Signal erfasst wird.

8. Transponder für ein System zum kontaktlosen Datenaustausch nach einem der Ansprüche 1 bis 6, bei dem die erste Antennenschleife und die zweite Antennenschleife einen ersten Resonanzkreis mit gegebener Ladung beziehungsweise einen zweiten Resonanzkreis mit gegebener Ladung bilden, wobei der Transponder umfasst:
- erste Modulationsmittel (114a, 214a) zum Modulieren der Ladung des ersten Resonanzkreises (110a, 210a) und zweite Modulationsmittel (114a, 214a) zum Modulieren der Ladung des zweiten Resonanzkreises,
- Steuerungsmittel (230), die dazu ausgelegt sind, erste Modulationsmittel und zweite Modulationsmittel zu steuern, wobei der Transponder **dadurch gekennzeichnet ist, dass** im Anschluss an eine Erfassung einer Phasenverschiebung durch die Phasenverschiebungsanalysemittel, die von einer vorbestimmten Phasenverschiebung verschieden ist, die Steuerung der Modulation des ersten Resonanzkreises und des zweiten Resonanzkreises gestoppt wird.

9. Transponder nach einem der Ansprüche 1 bis 8, wobei die erste Schleife und die zweite Schleife eine geschlossene Kontur in Form einer Acht (15) bilden.

10. Transponder nach einem der Ansprüche 1 bis 8, wobei die erste Schleife und die zweite Schleife eine erste Kontur beziehungsweise eine zweite Kontur bilden, die von der ersten Kontur getrennt ist.

11. Transponder nach Anspruch 1, wobei die erste Schleife und die zweite Schleife eine erste Kontur beziehungsweise eine zweite Kontur bilden, wobei die erste Kontur (25) innerhalb der zweiten Kontur (26) angeordnet ist.

12. Lesegerät für ein System zum kontaktlosen Datenaustausch, umfassend eine Datensende-/ Empfangseinheit, die ausgestattet ist mit:
- wenigstens einer Antennenschleife (310a, 35, 25, 15) und mit wenigstens einer weiteren Antennenschleife (310b, 36, 26, 16) zum Realisieren einer Kopplung mit einem Transponder, **gekennzeichnet durch**
- Phasenverschiebungsmittel (355), die dazu ausgelegt sind, eine vorbestimmte Phasenverschiebung zwischen wenigstens einem Signal, das **durch** die Antennenschleife ausgesandt ist, und wenigstens einem weiteren Signal einzuführen, das **durch** die andere Antennenschleife ausgesandt ist, wobei die Phasenverschiebung gleich K **π* ist, wobei K eine ungerade ganze Zahl größer als 0 ist.

13. System zum kontaktlosen Datenaustausch, umfassend einen Transponder nach einem der Ansprüche 1 bis 11 sowie ein Lesegerät nach Anspruch 12.

## Claims

1. Transponder of a contactless data exchange system, comprising:
- a unit for receiving and transmitting data provided with at least one first antenna loop (110a, 210a) and at least one second antenna loop (110b, 210b) in order to carry out a coupling with a reader (2),**characterized by**
- means (216, 224a, 224b, 115, 116) to authorise or prevent the data transmission according to the phase shift (ΔΦ) between a first carrier signal received by the first loop and a second carrier signal received by the second loop.

2. Transponder of a contactless data exchange system according to claim 1, said means for authorising or preventing the data transmission comprising:
- means for phase shifting (115), to introduce a given phase shift to a signal coming from the second loop,
- means for adding (116), to add a signal coming from said first loop and another signal, coming from said second loop and coming from means for phase shifting.

3. Transponder of a contactless data exchange system according to claim 2, the transponder being powered using a signal resulting from the sum between a signal coming from the first loop and a signal coming from the second loop and having undergone the given phase shift.

4. Transponder of a contactless data exchange system according to claim 2 or 3, wherein when the phase shift between the first signal received by the first loop (110a) and the second signal received by the second loop (110b), is different by a predetermined phase shift, the transponder is not powered or is under-powered.

5. Transponder of a contactless data exchange system according to one of claims 2 to 4, the given phase shift being a phase shift of K *π (with K an odd integer greater than 0).

6. Transponder of a contactless data exchange system according to claim 1, said means for authorising or preventing the data transmission comprising:
- means for phase shift analysis (216), to analyse the phase shift between a first signal received by the first loop and a second signal received by the second loop, a transmission of data being prevented consecutive to a detection by the means for analysing phase shifts of a phase shift that differs from a predetermined phase shift.

7. Transponder of a contactless data exchange system according to claim 6, wherein the transponder further comprises means for demodulating (224a, 224b), the means for analysing phase shifts being provided for emitting an activation or deactivation signal of the means for demodulating (224a, 224b) according to the phase shift detected between the first signal and the second signal.

8. Transponder of a contactless data exchange system according to one of claims 1 to 6, wherein the first antenna loop and the second antenna loop respectively form a first resonant circuit of a given charge and a second resonant circuit of a given charge, the transponder comprising:
- first means for modulating (114a, 214a) to modulate the load of the first resonant circuit (110a, 210a) and second means for modulating (114a, 214a) to modulate the load of the second resonant circuit,
- means of control (230) able to control the first means for modulating and second means for modulating, the transponder being **characterised in that** consecutive to a detection by the means for analysing phase shifts of a phase shift different from a predetermined phase shift, the control of the modulation of the first resonant circuit and of the second resonant circuit is stopped.

9. Transponder according to one of claims 1 to 8, the first loop and the second loop forming a closed contour in the shape of an eight (15).

10. Transponder according to one of claims 1 to 8, the first loop and the second loop respectively forming a first contour and a second contour separate from the first contour.

11. Transponder according to claim 1, the first loop and the second loop respectively forming a first contour and a second contour, the first contour (25) being located inside the second contour (26).

12. Reader of a contactless data exchange system, comprising a data sending/receiving unit provided with:
- at least one antenna loop (310a, 35, 25, 15) and at least one other antenna loop (310b, 36, 26, 16) in order to carry out a coupling with a transponder, **characterized by**
- means for phase shifting (355), to introduce a predetermined phase shift between at least one signal emitted by said antenna loop and at least one other signal emitted by said other antenna loop, said phase shift being equal to K *π where K is an odd integer greater than 0.

13. Contactless data exchange system, comprising a transponder according to one of claims 1 to 11, and a reader according to claim 12.
